# EUROPÄISCHE PATENTSCHRIFT

(11) **EP 2 862 431 B1**
(45) Veröffentlichungstag und Bekanntmachung des Hinweises auf die Patenterteilung: **20.01.2016**
(21) Anmeldenummer: 13188884.4
(22) Anmeldetag: 16.10.2013
(51) Int. Cl.: A01C 7/10

(54) **Dosiereinrichtung zum Dosieren von Schüttgut**
Dosing equipment for dosing bulk material
Dispositif de dosage pour le dosage de matières en vrac

(43) Veröffentlichungstag der Anmeldung: 22.04.2015
(73) Patentinhaber: Kverneland AS, 4355 Kvernaland (NO)
(72) Erfinder: Matrangolo, Enrico, 59494 Soest (DE)
(74) Vertreter: Schweiger, Johannes

(56) Entgegenhaltungen:
- EP-A1- 2 022 308
- EP-A2- 0 358 878
- WO-A1-2012/131551
- DE-A1-102007 044 178

## Beschreibung

Die vorliegende Erfindung betrifft eine Dosiereinrichtung zum Dosieren von rieselfähigem Schüttgut, insbesondere Saatgut und/oder Dünger, aus einem Behälter gemäß Patentanspruch 1 sowie einer Verteilmaschine zum Ausbringen von rieselfähigem Schüttgut, insbesondere Saatgut und/oder Dünger, mit einer Dosiereinrichtung gemäß Patentanspruch 8.

Derartige Dosiergeräte werden bei landwirtschaftlichen Maschinen eingesetzt, um Saatgut und/oder Dünger präzise zu dosieren und anschließend auf landwirtschaftlichen Flächen auszubringen, wie beispielsweise in der EP 0 094 583 beschrieben.

Die DE 10 2007 044 178 A1 zeigt eine pneumatisch Sämaschine mit einer Dosiereinrichtung auf. Dies weist eine Abdrehprobenöffnung auf mit einer die Abdrehprobenöffnung freigebenden, zum unteren Öffnungsrand geneigten Leitklappe zum Ausleiten des dosierten Saatguts für die Abdrehprobe.

Aufgabe der vorliegenden Erfindung ist es, eine Dosiereinrichtung anzugeben, mit der die Funktion der Dosiereinrichtung optimiert wird, insbesondere hinsichtlich der Zugänglichkeit und Funktionalität zur Entnahme einer Abdrehprobe.

Diese Aufgabe wird mit den Merkmalen der Patentansprüche 1 und 8 erfüllt. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart und in beliebiger Kombination beanspruchbar sein.

Der Erfindung liegt der Gedanke zugrunde, einen Klappenmechanismus derart in den Förderkanal zu integrieren, dass dieser einfach zu bedienen ist und störungsfrei arbeitet. Hierzu weist der Klappenmechanismus zwei separate, insbesondere aber mechanisch verbundene, Klappen in Form einer Umlenkklappe und einer Öffnungsklappe auf.

Dies ist insbesondere in Verbindung mit Druckausgleichsmitteln zum Ausgleich eines etwaigen Druckunterschieds zwischen dem Förderkanal und der Umgebung sinnvoll, da durch die Umlenkklappe gleichzeitig eine Abdichtung des Förderkanals gegenüber den Druckausgleichsmitteln ermöglicht wird.

Indem die Umlenkklappe mit ihrem freien Ende in einer Förderrichtung des Schüttguts weist, kann eine schonende Umlenkung des Schüttgutes erfolgen. Weiterhin kann die Umlenkklappe gleichzeitig als Wand des Förderkanals, insbesondere bündig zum Förderkanal, ausgebildet werden. Darüber hinaus ist eine Abdichtung des Förderkanals leichter realisierbar. Insbesondere weist die Umlenkklappe ausschließlich einen Freiheitsgrad um die Schwenkachse auf.

Die Dosiereinrichtung wird weitergebildet, indem die Umlenkklappe im Förderkanal gegenüberliegend zur Öffnungsklappe angeschlagen ist.

Soweit der Klappenmechanismus so ausgebildet ist, dass die Öffnungsklappe und die Umlenkklappe über ein mechanisches Verbindungselement gemeinsam betätigbar sind, wird die Bedienung erleichtert und eine Fehlbedienung ausgeschlossen.

Die Druckausgleichsmittel können mindestens eine mit einer Membran versehene Druckausgleichsöffnung umfassen. Das Öffnungsverhalten der Membran ist in vorteilhafter Weise exakt einstellbar, insbesondere durch eine geeignete Materialwahl und/oder deren dessen -stärke und -fläche und/oder die Form und/oder Abmessungen der Membran. Die Membran ist durch Auswahl des an die Betriebsbedingungen angepassten Membranmaterials besonders langlebig. Darüber hinaus ist der Öffnungsquerschnitt einer Membran verglichen mit einer etwaigen Ventillösung größer, so dass ein unmittelbarer und verbesserter Druckausgleich möglich ist.

Gemäß einer weiteren, vorteilhaften Ausführungsform der Erfindung ist vorgesehen, dass die Druckausgleichsmittel bei einem Druckunterschied, insbesondere bei einem Unterdruck im Förderkanal, von mindestens 1 mbar, insbesondere mindestens 5 mbar, vorzugsweise mindestens 10 mbar, noch bevorzugter mindestens 15 mbar, betätigt werden.

Gemäß der vorliegenden Erfindung kann die Dosiereinrichtung besonders einfach konstruktiv gelöst werden, indem die Druckausgleichsmittel passiv wirkend ausgebildet sind. Mit anderen Worten: Die Druckausgleichsmittel sind selbsttätig arbeitend konstruiert und werden durch einen bestimmten, im Förderkanal gegenüber der Umgebung vorliegenden Druckunterschied ausgelöst.

Gemäß einer weiteren vorteilhaften Ausführungsform ist vorgesehen, dass die Druckausgleichsmittel bei einem Druckunterschied von weniger als 15 mbar, insbesondere weniger als 10 mbar, vorzugsweise weniger als 5 mbar, noch bevorzugter weniger als 1 mbar geschlossen sind. Geschlossen heißt, dass kein Druckausgleich zwischen dem Förderkanal und der Umgebung stattfindet, wobei die Druckausgleichsmittel insbesondere den Förderkanal gegenüber der Umgebung abdichtend ausgebildet sind.

Gemäß einem weiteren Aspekt der vorliegenden Erfindung ist im Förderkanal zwischen dem Zulauf und den Druckausgleichsmitteln ein von außerhalb des Förderkanals betätigbarer, insbesondere gegenüber den Druckausgleichsmitteln dicht ausgebildeter, Klappenmechanismus zur Umlenkung des rieselfähigen Schüttguts, insbesondere Saatguts und/oder Düngers, zu einer Abdrehprobenöffnung angeordnet.

Als eigenständige Erfindung wird eine Verteilmaschine zum Ausbringen von rieselfähigem Schüttgut, insbesondere Saatgut und/oder Dünger, mit einer vorbeschriebenen Dosiereinrichtung offenbart, wobei alle Merkmale der Dosiereinrichtung auch für die Verteilmaschine gelten.

Weiterhin wird als eigenständige Erfindung ein Verfahren mit in der vorliegenden Beschreibung offenbarten Verfahrensmerkmalen offenbart, wobei etwaige Verfahrensmerkmale auch als Vorrichtungsmerkmale und umgekehrt offenbart gelten sollen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine schematische Perspektivansicht eines Ausschnitts einer erfindungsgemäßen Verteilmaschine,

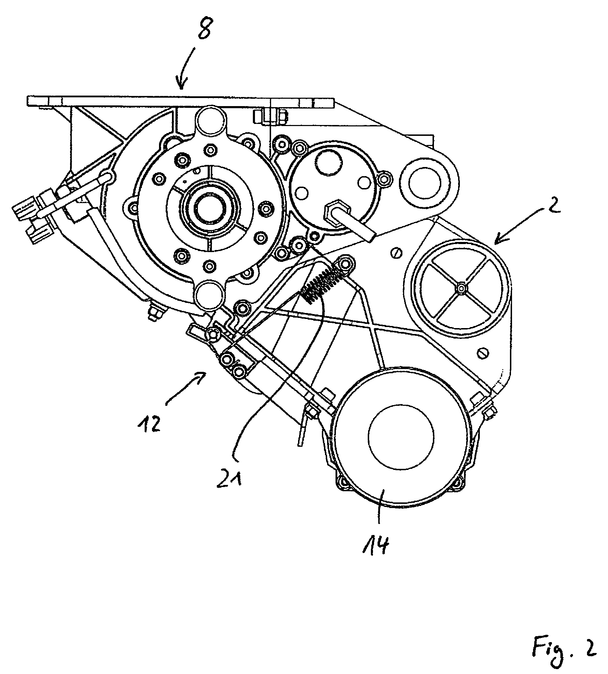

- Figur 2: eine schematische Seitenansicht einer erfindungsgemäßen Dosiereinrichtung,

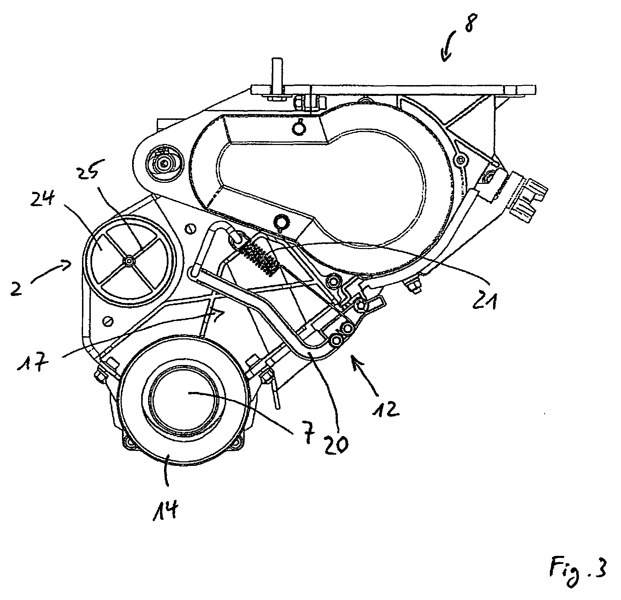

- Figur 3: eine schematische Seitenansicht der Dosiereinrichtung gemäß Figur 2 von der gegenüberliegenden Seite,

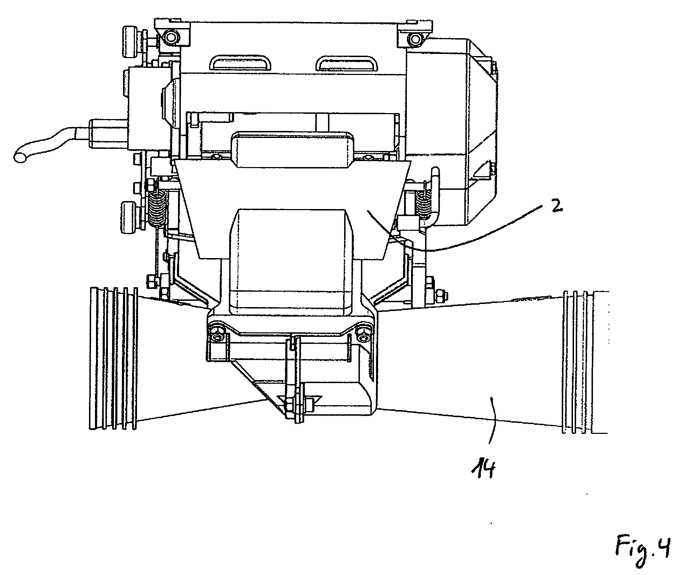

- Figur 4: eine schematische Seitenansicht der Dosiereinrichtung von hinten,
- Figur 5: eine schematische Schnittansicht von Druckausgleichsmitteln der Dosiereinrichtung in Druckausgleichsposition,
- Figur 6: eine schematische Perspektivansicht der Dosiereinrichtung in einer geschlossenen Betriebsposition eines Klappenmechanismus und

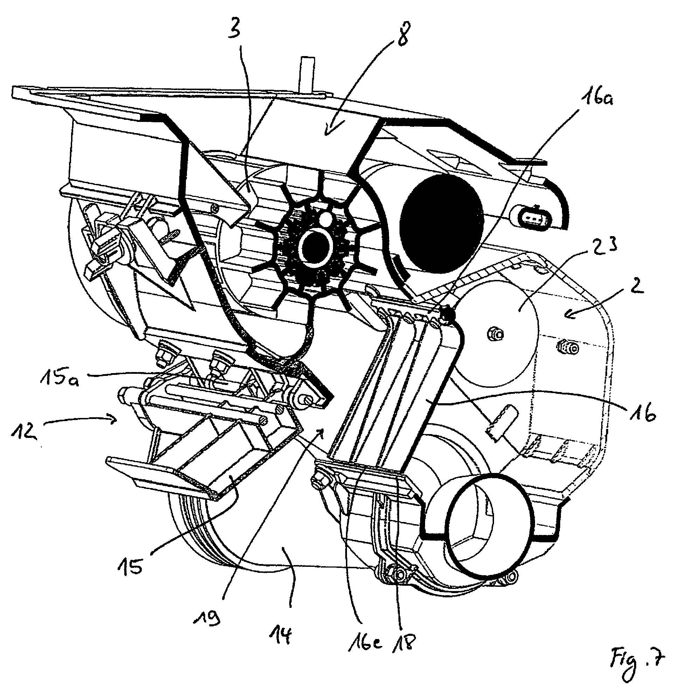

- Figur 7: eine schematische Perspektivansicht der Dosiereinrichtung in einer geöffneten Betriebsposition des Klappenmechanismus.

In den Figuren sind gleiche Bauteile und Bauteile mit der gleichen Funktion mit den gleichen Bezugszeichen gekennzeichnet.

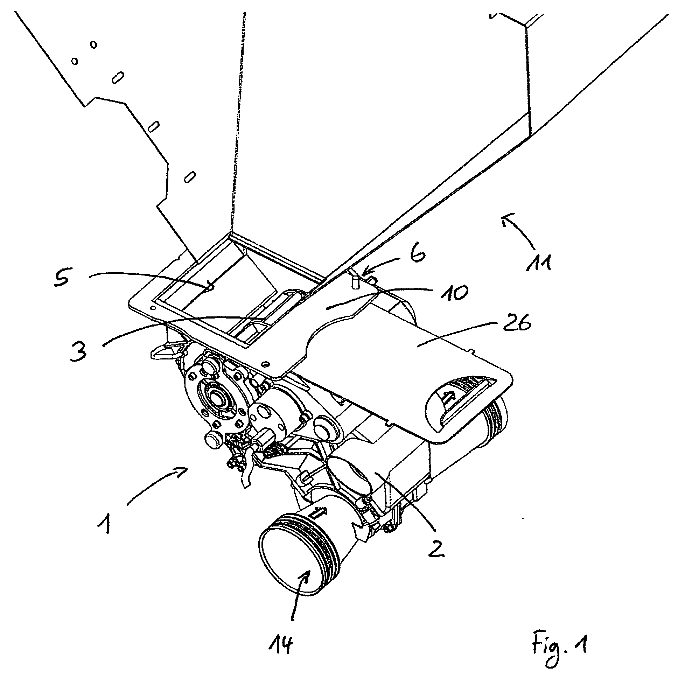

In der Figur 1 ist ein Behälter 11 zur Aufnahme von rieselfähigem Schüttgut, insbesondere Saatgut oder Dünger, mit einem Boden 10 angedeutet, an dessen Boden über Befestigungsmittel 6 eine Dosiereinrichtung 1 derart fixierbar ist, dass ein Zulauf 8 der Dosiereinrichtung 1 im Bereich einer Bodenöffnung 5 angeordnet ist. Die Bodenöffnung 5 ist über einen Schieber 4 verschließbar.

Beim Betrieb der Dosiereinrichtung 1 wird Saatgut aus dem Behälter 11 durch einen Förderkanal 9 von dem Zulauf 8 bis zu einem am gegenüberliegenden Ende des Förderkanals 9 angeordneten Dosierabgang 7 gefördert. Die Dosierung und Förderung erfolgt durch ein zumindest teilweise in den Förderkanal 9 ragendes Förderrad 3. Der Dosierabgang 7 mündet an einer pneumatisch betriebenen Förderleitung 14, von wo aus das Schüttgut über nicht näher dargestellte Verteiler zu korrespondierenden Säscharen der Verteilmaschine verteilt wird.

In Strömungsrichtung des Schüttguts vom Behälter 11 entlang des Förderkanals 9 verlaufend weist die Dosiereinrichtung 1 insbesondere einen oder mehrere der nachfolgenden Abschnitte, insbesondere in dieser Reihenfolge, auf:
1. einen Zulaufabschnitt, der sich an den Schüttgutbehälter 11 anschließt und insbesondere den Zulauf 8 umfasst, der, insbesondere unmittelbar, zum Förderrad 3 mündet;
2. einen das Förderrad 3 umfassenden Förderradabschnitt, in welchem der Förderkanal 9 zumindest teilweise so geformt ist, dass eine Rotationsaußenkontur des Förderrades 3 an dem Förderkanal 9 entlang verläuft;
3. einen Abdrehabschnitt zur Entnahme einer Abdrehprobe, insbesondere mit einem erfindungsgemäßen Klappenmechanismus 12, durch welchen der Förderkanal 9 mindestens zwei unterschiedliche Förderstrecken umfasst;
4. einen Druckausgleichsabschnitt mit erfindungsgemäßen Druckausgleichsmitteln 2 und
5. einem Förderleitungsabschnitt, an dem die Förderleitung 14, insbesondere dichtend, anordenbar, insbesondere befestigbar, ist.

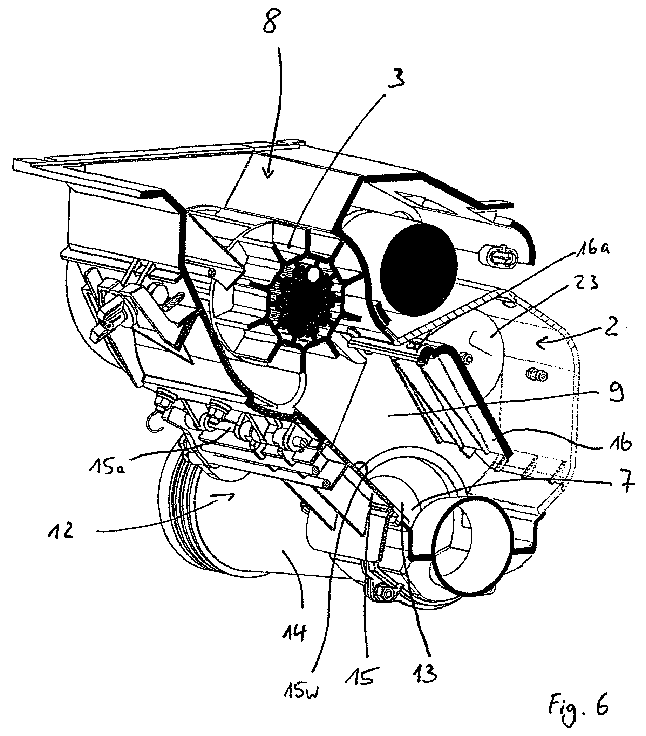

Der Betrieb der Dosiereinrichtung 1 beim Ausbringen von rieselfähigem Schüttgut, insbesondere Saatgut und/oder Dünger, lässt sich am besten in Figur 6 erkennen und beschreiben. Aufgabe des Dosierrades 3 ist es, eine bestimmte Schüttgutmenge von dem Behälter 11 zur Förderleitung 14 zu bringen, wobei die Fördermenge durch die Rotationsgeschwindigkeit des Förderrades 3 und deren geometrische Abmessungen, insbesondere an umfangsseitig angeordneten Fördernocken, bestimmt wird. Somit kann der Förderstrom, insbesondere ausschließlich, durch die Rotationsgeschwindigkeit des Förderrades 3 gesteuert werden. Bei Stillstand des Förderrades 3 wird kein Schüttgut gefördert. Zusätzlich kann ein Schieber 26 zum Verschließen der Bodenöffnung 5 vorgesehen sein.

Sobald das Schüttgut entlang einer hierdurch definierten ersten Förderstrecke am Dosierabgang 7 ankommt, wird es von dem Luftstrom der pneumatisch betriebenen Förderleitung 14 erfasst und weitertransportiert. Insbesondere ist die Förderleitung 14 quer zum Förderkanal 9 an dem Dosierabgang 7 angeordnet.

Durch den pneumatischen Betrieb einerseits und die kontinuierliche Zuführung von Schüttgut andererseits werden die Druckverhältnisse im Abdrehabschnitt und im Druckausgleichsabschnitt beeinflusst, da die beiden vorgenannten Abschnitte gegenüber der Umgebung vorzugsweise dicht ausgebildet sind, insbesondere in einer Förderposition des Klappenmechanismus 12 (siehe Figur 6).

Der Klappenmechanismus 12 weist eine Öffnungsklappe 15 zur Öffnung einer Abdrehprobenöffnung 19 des Förderkanals 9 auf, um eine Abdrehprobe aus dem Förderstrom zu entnehmen beziehungsweise den Förderstrom entsprechend umzulenken. Zur Umlenkung ist eine Umlenkklappe 16 vorgesehen, die insbesondere gemeinsam mit der Öffnungsklappe 15 betätigt wird, vorzugsweise über ein mechanisches Verbindungselement 17. Hierdurch wird eine zweite Förderstrecke definiert.

Der Klappenmechanismus 12 weist insbesondere zwei mögliche Betriebspositionen auf, nämlich:
1. Eine Abdrehprobenposition, bei der die Umlenkklappe 16 für eine Umlenkung des Schüttguts sorgt und die Öffnungsklappe 15 zur Entnahme der Abdrehprobe geöffnet ist sowie
2. Eine Förderposition, bei der die Umlenkklappe 16 die erste Förderstrecke wieder freigibt und die Öffnungsklappe 15 geschlossen ist.

Die erste und die zweite Förderstrecke sind im Zulaufabschnitt und im Förderradabschnitt identisch und verzweigen im Abdrehprobenabschnitt, insbesondere durch die Umlenkklappe 16.

Die Öffnungsklappe 15 weist eine Schwenkachse 15a auf, um welche die Öffnungsklappe 15 aus einer geschlossenen in eine geöffnete Position schwenkbar ist. In der geschlossenen Position gemäß Figur 6 bildet ein Wandabschnitt 15w der Öffnungsklappe 15 einen Teil einer Innenwand des Förderkanals, insbesondere bündig und/oder fluchtend mit dem Förderkanal 9.

Die Umlenkklappe 16 weist ebenfalls eine Schwenkachse 16a auf, um welche die Umlenkklappe 16 aus einer Abdrehprobenstellung der Umlenkklappe 16 in eine Förderstellung der Umlenkklappe 16 schwenkbar ist. In der Abdrehprobenstellung befindet sich die Dosiereinrichtung in der Abdrehprobenposition.

Die Umlenkklappe 16 ist so angeordnet, dass ein freies Ende 16e der Umlenkklappe 16 in Förderrichtung der jeweiligen Förderstrecke des Schüttguts weist. Mit anderen Worten: Die Schwenkachse 16a ist näher an dem Förderrad 3 angeordnet als das Ende 16e, das insbesondere vom Förderrad 3 weg weist.

Die Umlenkklappe 16 ist so dimensioniert, dass diese in der Abdrehprobenstellung mit ihrem zur Schwenkachse 16a gegenüberliegenden Ende 16e an einer Seitenkante 18 einer Abdrehprobenöffnung 19 des Förderkanals 9 anliegt. Dabei verläuft die Umlenkklappe 19 schräg durch den Förderkanal 9, damit das Schüttgut für die Abdrehprobe zur Abdrehprobenöffnung 19 hin umgelenkt werden. Dies ist konstruktiv dadurch gelöst, dass die Schwenkachse 16a der Umlenkklappe 16 näher an dem Förderrad 3 angeordnet ist als das Ende 16e.

Der Klappenmechanismus 12 wird insbesondere durch einen Kniehebel 20 als mechanisches Verbindungselement 17 realisiert, der, insbesondere mechanisch, von außerhalb der Dosiereinrichtung 1 betätigbar ist, insbesondere entgegen einer durch eine Feder 21 bewirkte, die Öffnungsklappe 15 und die Umlenkklappe 16 verbindende Feder 21 bewirkte Federkraft.

Die Druckausgleichsmittel 2 sind mittels eines Gehäuseelements 22 an der Dosiereinrichtung 1, insbesondere dicht, angebracht, insbesondere mechanisch angeflanscht. Weiterhin sind an dem Gehäuseelement 22, insbesondere zwei gegenüberliegend angeordnete, Membranen 23 an Membranöffnungen 24 des Gehäuseelements 22 vorgesehen. Die Membranöffnungen 24 sind insbesondere parallel zueinander fluchtend und/oder parallel verlaufend zu der Förderleitung 14 angeordnet.
In einer alternativen Ausführungsform kann eine einzige Membran 23, welche an dem Gehäuseelement angebracht ist, ausreichend sein.

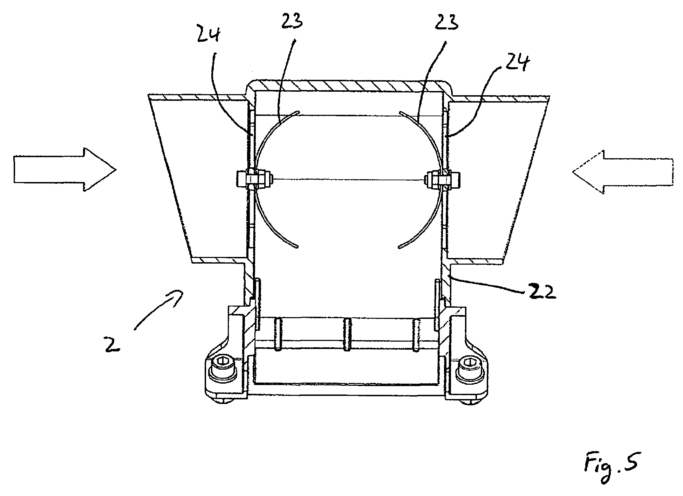

Die Membranen 23 sind an Streben 25, insbesondere konzentrisch zur jeweiligen Membranöffnung 24, angebracht. Die Membranen 23 bestehen aus einem flexiblen Material, insbesondere mit einem elastomeren Charakter, vorzugsweise einem Elastomer, wie zum Beispiel Kautschuk, alternativ aus einem thermoplastischen Elastomer. Durch die, vorzugsweise im Querschnitt kreisförmige, Form der Membran und ausschließlich zentrische Fixierung verformt sich die Membran 23 bei einem Druckunterschied zwischen dem Förderkanal 9 und der Umgebung nach innen in das Innere des Gehäuseelements 22. Somit kann durch die Membranöffnung 24 ein Druckausgleich stattfinden (siehe Pfeile in Figur 5). Sobald ein Druckausgleich erfolgt ist, verschließen die Membranen 23 die Membranöffnungen 24 auf Grund der Elastizität der Membranen 23 selbsttätig. Die Druckausgleichsmittel 2 werden demnach erfindungsgemäß durch die Druckverhältnisse im Förderkanal 9, insbesondere in dem Druckausgleichsabschnitt, automatisch gesteuert.

Durch die Materialwahl und Materialstärke der Membranen 23 und den Öffnungsdurchmesser der Membranöffnungen 24 wird das Ansprechverhalten der Druckausgleichsmittel 2 festgelegt, wobei die Membran insbesondere bei einem Unterdruck von etwa 10 mbar öffnen soll, der beispielsweise dann in dem Förderkanal 9 anliegen kann, wenn an der Förderleitung 14 ein Luftstrom anliegt, das Förderrad 3 aber stillsteht. Dies kann beispielsweise der Fall sein, wenn an dem Vorgewende kein Schüttgut ausgebracht werden soll. Auch kann der Fall auftreten, wenn eine Abdrehprobe über den Klappenmechanismus 12 entnommen wird, wodurch in dem durch die Umlenkklappe 16 verschlossenen Druckausgleichsbereich auf Grund der Förderleitung 14 ein Unterdruck entstehen kann.

Somit sorgt die Erfindung mit anderen Worten insbesondere dafür, dass nach Stoppen des Förderrades 3 (beispielsweise am Vorgewende, wo kein Schüttgut ausgebracht werden soll) trotz Weiterbetrieb der Förderleitung 14 kein Unterdruck an dem Förderrad 3 anliegt, da die Membran(en) 23 automatisch für einen Druckausgleich sorgen.

### Bezugszeichenliste

- 1: Dosiereinrichtung
- 2: Druckausgleichsmittel
- 3: Förderrad
- 4: Schieber
- 5: Bodenöffnung
- 6: Befestigungsmittel
- 7: Dosierabgang
- 8: Zulauf
- 9: Förderkanal
- 10: Boden
- 11: Behälter
- 12: Klappenmechanismus
- 13: Auslauf
- 14: Förderleitung
- 15: Öffnungsklappe
- 15a: Schwenkachse
- 15w: Wandabschnitt
- 16: Umlenkklappe
- 16a: Schwenkachse
- 16e: Ende
- 17: Verbindungselement
- 18: Seitenkante
- 19: Abdrehprobenöffnung
- 20: Kniehebel
- 21: Feder
- 22: Gehäuseelement
- 23: Membranen
- 24: Membranöffnungen
- 25: Streben
- 26: Schieber

## Patentansprüche

1. Dosiereinrichtung zum Dosieren von rieselfähigem Schüttgut aus einem Behälter (11) mit
- einem Förderkanal (9) mit einem Zulauf (8) und einem Dosierabgang (7) und
- einem im Förderkanal (9) zwischen dem Zulauf (8) und dem Dosierabgang (7) angeordneten Klappenmechanismus (12),
**dadurch gekennzeichnet, dass** der Klappenmechanismus (12):
- eine Umlenkklappe (16) zur Umlenkung des rieselfähigen Schüttguts zu einer Abdrehprobenöffnung (19) und
- eine Öffnurigsklappe (15) zur Öffnung der Abdrehprobenöffnung (19) aufweist.

2. Dosiereinrichtung nach Anspruch 1, bei der die Umlenkklappe (16) mit ihrem freien Ende (16e) in einer Förderrichtung des Schüttguts weist.

3. Dosiereinrichtung nach Anspruch 1 oder 2, bei der die Umlenkklappe (16) im Förderkanal (9) gegenüberliegend zur Öffnungsklappe (15) angeschlagen ist.

4. Dosiereinrichtung nach einem der vorhergehenden Ansprüche, bei der die Öffnungsklappe (15) und die Umlenkklappe (16) über ein mechanisches Verbindungselement (17) gemeinsam betätigbar sind.

5. Dosiereinrichtung nach einem der vorhergehenden Ansprüche, bei der der Klappenmechanismus (12) durch Umschaltung von einer Förderposition der Dosiereinrichtung (1) in eine Abdrehprobenposition der Dosiereinrichtung (1) zwei Förderstrecken definiert.

6. Dosiereinrichtung nach Anspruch 5, bei der der Förderkanal (9) in der Abdrehprobenposition gegenüber einem Druckausgleichsabschnitt der Dosiereinrichtung (1) dicht ausgebildet ist.

7. Dosiereinrichtung nach einem der vorhergehenden Ansprüche, bei der der Klappenmechanismus (12) federbeauschlagt ist.

8. Verteilmaschine zum Ausbringen von Schüttgut mit einer Dosiereinrichtung nach einem der vorhergehenden Ansprüche.

## Claims

1. A metering device for metering flowable bulk material from a container (11) with
- a delivery channel (9) with an inlet (8) and a metering outlet (7) and
- a flap mechanism (12) disposed in the delivery channel (9) between the inlet (8) and the metering outlet (7),
**characterised in that** the flap mechanism (12):
- comprises a deflection flap (16) for deflecting the flowable bulk material to a calibration test opening (19) and
- an opening flap (15) for opening the calibration test opening (19).

2. The metering device according to claim 1, wherein the deflection flap (16) points with its free end (16e) in the delivery direction of the bulk material.

3. The metering device according to claim 1 or 2, wherein the deflection flap (16) is fitted in the delivery channel (9) lying opposite the opening flap (15).

4. The metering device according to any one of the preceding claims, wherein the opening flap (15) and the deflection flap (16) can be jointly actuated by a mechanical connecting element (17).

5. The metering device according to any one of the preceding claims, wherein the flap mechanism (12) defines two delivery paths by switching over from a delivery position of the metering device (1) into a calibration test position of the metering device (1).

6. The metering device according to claim 5, wherein the delivery channel (9) in the calibration test position is constituted tight with respect to a pressure compensation section of the metering device (1).

7. The metering device according to any one of the preceding claims, wherein the flap mechanism (12) is spring-loaded.

8. A distributing machine for outputting the bulk material with a metering device according to any one of the preceding claims.

## Revendications

1. Dispositif de dosage pour le dosage de matière en vrac pouvant s'écouler d'un récipient (11) comprenant
- un canal de transport (9) avec une arrivée (8) et un départ de dosage (7) et
- un mécanisme de volet (12) disposé dans le canal de transport (9) entre l'arrivée (8) et le départ de dosage (7),
**caractérisé en ce que** le mécanisme de volet (12) présente :
- un volet de déviation (16) pour dévier la matière en vrac pouvant s'écouler vers une ouverture de test de calibrage (19) et
- un volet d'ouverture (15) pour ouvrir l'ouverture de test de calibrage (19).

2. Dispositif de dosage selon la revendication 1, dans lequel le volet de déviation (16) est orienté dans un sens de transport de la matière en vrac par son extrémité libre (16e).

3. Dispositif de dosage selon la revendication 1 ou 2, dans lequel le volet de déviation (16) est monté face au volet d'ouverture (15) dans le canal de transport (9).

4. Dispositif de dosage selon l'une des revendications précédentes, dans lequel le volet d'ouverture (15) et le volet de déviation (16) peuvent être actionnés conjointement par un élément de liaison mécanique (17).

5. Dispositif de dosage selon l'une des revendications précédentes, dans lequel le mécanisme de volet (12) définit deux trajets de transport par le passage d'une position de transport du dispositif de dosage (1) à une position de test de calibrage du dispositif de dosage (1).

6. Dispositif de dosage selon la revendication 5, dans lequel le canal de transport (9) est conçu étanche par rapport à un tronçon de compensation de pression du dispositif de dosage (1), dans la position de test de calibrage.

7. Dispositif de dosage selon l'une des revendications précédentes, dans lequel le mécanisme de volet (12) est contraint par ressort.

8. Machine distributrice pour répandre de la matière en vrac comprenant un dispositif de dosage selon l'une des revendications précédentes.
